# EUROPEAN PATENT SPECIFICATION

(11) **EP 4 358 354 B1**
(45) Date of publication and mention of the grant of the patent: **01.07.2026**
(21) Application number: 23191701.4
(22) Date of filing: 16.08.2023
(51) Int. Cl.: H02J 7/00

(54) **ELECTRONIC DEVICE AND AN OPERATING METHOD OF THE ELECTRONIC DEVICE**
ELEKTRONISCHE VORRICHTUNG UND BETRIEBSVERFAHREN DER ELEKTRONISCHEN VORRICHTUNG
DISPOSITIF ÉLECTRONIQUE ET PROCÉDÉ DE FONCTIONNEMENT DU DISPOSITIF ÉLECTRONIQUE

(30) Priority: 21.10.2022 KR 20220136875; 26.05.2023 US 202318202425
(43) Date of publication of application: 24.04.2024
(73) Proprietor: Samsung Electronics Co., Ltd., Suwon-si, Gyeonggi-do 16677 (KR)
(72) Inventor: BAE, Junhan, 16677 Suwon-si (KR); KIM, Dongjoon, 16677 Suwon-si (KR); OH, Duseung, 16677 Suwon-si (KR); HEO, Woonhyung, 16677 Suwon-si (KR)
(74) Representative: Marks & Clerk LLP

(56) References cited:
- DE-T5- 112020 003 035
- US-A1- 2019 258 832
- US-A1- 2020 174 049
- US-A1- 2021 305 805

## Description

### Technical Field

Embodiments of the present disclosure described herein relate to an electronic device, and more particularly, to an electronic device for receiving a voltage from an external first device and transferring a voltage to an external second device and an operating method of the electronic device.

### Discussion of Related Art

A true wireless stereo (TWS) cradle functions as a station for wireless earphones. The TWS cradle may be supplied with a voltage from a first external device and may charge an internal battery. The TWS cradle may charge a second external device by transferring the voltage from the first external device or the charged voltage of the battery to the second external device.

The TWS cradle may be equipped with a connector that is connected to the first external device. However, the connector may become contaminated by conductive contaminants such as water and sweat. The connector of the TWS cradle typically uses a receptacle, which has a structural characteristic that makes it challenging to detect and remove the contaminants.

If the connector of the TWS cradle is contaminated and voltage is supplied from the first external device, the voltage may be transferred through the contaminants, thereby leading to corrosion of both the connector of the TWS cradle and a connector of the first external device connected to the connector of the TWS cradle.

US-A-2019/258832 discloses an electronic device including a power regulator, a connector including one or more signal terminals and one or more power terminals electrically connected to the power regulator, and a control circuit electrically connected to the one or more signal terminals. The control circuit is configured to identify a type of an external electronic device connected through the connector, identify detected values for at least some of the one or more signal terminals based at least on the identified type corresponding to a predetermined type, and output, through the power regulator, a predetermined voltage to the external electronic device through the one or more power terminals based at least on the detected value being within a first predetermined range.

US-A-2021/305805 discloses an electronic device comprising a housing; an interface connected to the housing or exposed through the housing and comprising at least one configuration channel (CC) pin; a circuit disposed inside the housing, comprising a current generator and a comparator, and electrically connected to the interface; a processor disposed inside the housing and operatively connected to the interface and the circuit; and a memory operatively connected to the processor. The memory cause the processor, when executed, to detect moisture corresponding to the at least one CC pin on the basis of the comparator while the at least one CC pin is connected to the current generator and to control at least one switch disposed between the current generator and the at least one CC pin, in response to detection of the moisture, thereby conducting switching such that the at least one CC pin is not connected to the current generator.

US-A-2020/174049 discloses an electronic device including a connector having a plurality of pins, and a detection circuit having at least one of a pull-up circuit and a pull-down circuit, and a connection circuit between a first pin and a second pin of the plurality of pins, the detection circuit is configured to select the first pin and the second pin, measure an impedance between the selected first pin and second pin by controlling a connection of the connection circuit and the at least one of the pull-up circuit and the pull-down circuit, and generate a detection signal indicating a presence or an absence of a foreign object on the connector based on the measured impedance.

DE-T5-11 2020 003035 discloses charging apparatus including a receptacle including terminals; a power supply configured to supply a voltage or a current to a first terminal; a first voltage detector configured to detect a voltage of the first terminal; a second voltage detector configured to detect a voltage of a second terminal at one place, two places or three places away from the first terminal; and a processor. The processor is configured to determine whether the voltage of the second terminal is equal to or higher than a second threshold value during a period in which the voltage of the first terminal is equal to or higher than a first threshold value, and stop supply of the voltage or the current from the power supply to the first terminal in a case in which the voltage of the second terminal is equal to or higher than the second threshold value.

### SUMMARY

Embodiments of the present disclosure provide an electronic device that can charge a second external device irrespective of whether a connector of the electronic device is contaminated or not. This is achieved by detecting corruption in the connector and blocking the electrical connection such that a voltage is not supplied from a first external device. Additionally, embodiments of the present disclosure provide an operating method of the electronic device.

The invention provides an electronic device as claimed in claim 1.

### BRIEF DESCRIPTION OF THE FIGURES

The above and other features of the present disclosure will become apparent by describing in detail embodiments thereof with reference to the accompanying drawings.
FIG. 1 is a diagram illustrating an electronic device according to an embodiment of the present disclosure.
FIG. 2 is a diagram illustrating an example of a connector according to an embodiment of the present disclosure.
FIG. 3 is a diagram illustrating an example of an operating method of an electronic device according to an embodiment of the present disclosure.
FIG. 4 is a diagram illustrating an example of a connector and a corruption detection circuit according to an embodiment of the present disclosure.
FIG. 5 is a diagram illustrating an example in which an electronic device performs corruption detection in different manners according to an embodiment of the present disclosure.
FIG. 6 is a diagram illustrating an example in which a corruption detection circuit performs corruption detection in a pull-up manner according to an embodiment of the present disclosure.
FIG. 7 is a diagram illustrating a process in which corruption detection of a pull-up manner is performed in a connector and a corruption detection circuit according to a method of FIG. 6.
FIG. 8 is a diagram illustrating an example in which after a connector is corrupted, an electronic device detects whether the corruption is removed in a pull-up manner according to an embodiment of the present disclosure.
FIG. 9 is a diagram illustrating an example in which an electronic device performs corruption detection in a pull-down manner according to an embodiment of the present disclosure.
FIG. 10 is a diagram illustrating a process in which corruption detection of a pull-down manner is performed in a connector and a corruption detection circuit according to a method of FIG. 9.
FIG. 11 is a diagram illustrating an example in which after a connector is corrupted, an electronic device detects whether the corruption is removed in a pull-down manner according to an embodiment of the present disclosure.
FIG. 12 is a diagram illustrating an example in which an electronic device operates when an external voltage exists and a connector is not corrupted.
FIG. 13 is a diagram illustrating an example in which an electronic device operates when a connector is corrupted.

### DETAILED DESCRIPTION OF THE EMBODIMENTS

Below, embodiments of the present disclosure will be described in detail and clearly to such an extent that one of ordinary skill in the art can easily implement the present disclosure. Below, the term "and/or" is interpreted as including any one of items listed with regard to the term, or a combination of some of the listed items.

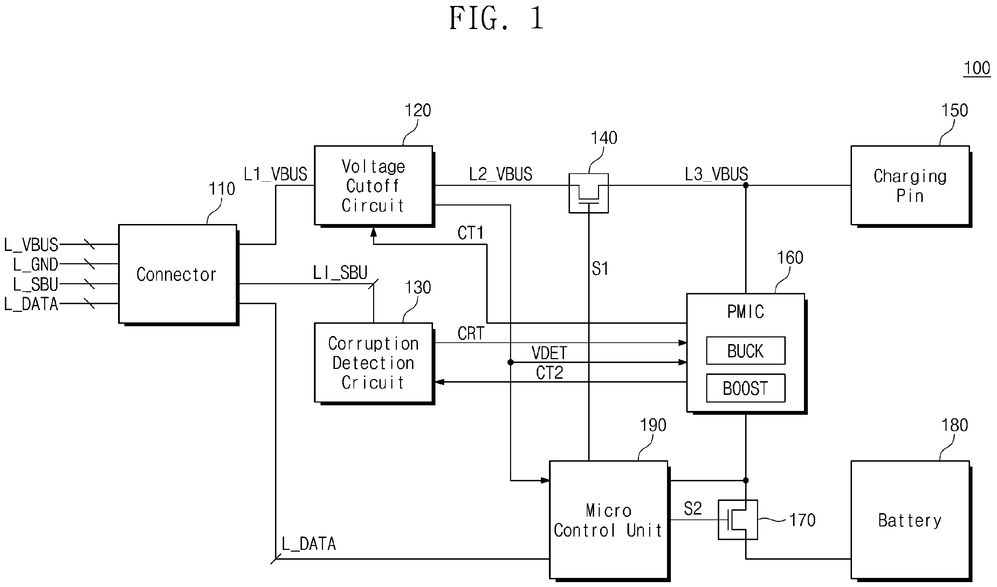

FIG. 1 is a diagram illustrating an electronic device 100 according to an embodiment of the present disclosure. In an embodiment, the electronic device 100 may be implemented with a true wireless stereo (TWS) cradle. Referring to FIG. 1, the electronic device 100 may include a connector 110, a voltage cutoff circuit 120, a corruption detection circuit 130, a first switch 140, a charging pin 150, a power management integrated circuit (PMIC) 160, a second switch 170, a battery 180, and a micro control unit 190.

The connector 110 may be connected with a first device (hereinafter referred to as a "first external device") located outside the electronic device 100. For example, the connector 110 may be a receptacle or a USB Type-C receptacle. The connector 110 may include terminals for connecting with various lines of the first external device, which include voltage lines L_VBUS, ground lines L_GND, auxiliary lines L_SBU, and data lines L_DATA.

The connector 110 may connect a voltage (e.g., VBUS) transferred through the voltage lines L_VBUS of the first external device with a first voltage line L1_VBUS in the electronic device 100. The connector 110 may transfer a ground voltage transferred through the ground lines L_GND of the first external device to a ground node of the electronic device 100. The connector 110 may connect signals transferred through the auxiliary lines L_SBU of the first external device with auxiliary voltage lines LI_SBU in the electronic device 100. The connector 110 may connect signals transferred through the data lines L_DATA of the first external device with data lines LI_DATA in the electronic device 100.

The voltage cutoff circuit 120 may be connected between the first voltage line L1_VBUS and a second voltage line L2_VBUS. The voltage cutoff circuit 120 may operate in response to a first control signal CT1 received from the power management integrated circuit 160. The voltage cutoff circuit 120 may block or establish an electrical connection between the first voltage line L1_VBUS and the second voltage line L2_VBUS in response to the first control signal CT1.

The voltage cutoff circuit 120 may detect whether an external voltage is supplied from the first external device to the first voltage line L1_VBUS through the connector 110. When the external voltage is supplied to the first voltage line L1_VBUS, the voltage cutoff circuit 120 may activate a detection signal VDET. For example, the detection signal VDET with a high level may be applied to the PMIC 160. When the external voltage is not supplied to the first voltage line L1_VBUS, the voltage cutoff circuit 120 may deactivate the detection signal VDET. For example, the detection signal VDET with a low level may be applied to the PMIC 160.

The corruption detection circuit 130 may receive a second control signal CT2. In response to the second control signal CT2, the corruption detection circuit 130 may detect whether the connector 110 is corrupted. When the connector 110 is corrupted, the corruption detection circuit 130 may activate a corruption signal CRT. For example, the corruption signal CRT with a high level may be applied to the PMIC 160. When the connector 110 is not corrupted, the corruption detection circuit 130 may deactivate the corruption signal CRT. For example, the corruption signal CRT with a low level may be applied to the PMIC 160.

The first switch 140 may operate in response to a first signal S1 received from the micro control unit 190. In response to the first signal S1, the first switch 140 may electrically connect the second voltage line L2_VBUS and a third voltage line L3_VBUS or may electrically disconnect the second voltage line L2_VBUS from the third voltage line L3_VBUS.

The charging pin 150 may be configured to be connected with a second device (hereinafter referred to as a "second external device") located outside of the electronic device 100. For example, the charging pin 150 may be connected with wireless earphones. When the second external device is connected, the charging pin 150 may provide a voltage of the third voltage line L3_VBUS to the second external device to enable charging of the second external device. For example, the charging pin 150 may include two or more charging pins.

The power management integrated circuit 160 may receive the detection signal VDET from the voltage cutoff circuit 120. When the external voltage is transferred to the third voltage line L3_VBUS, the power management integrated circuit 160 may step down the voltage of the third voltage line L3_VBUS, may charge the battery 180 with the stepped-down voltage, and may power the micro control unit 190. When the external voltage is not transferred to the third voltage line L3_VBUS, the power management integrated circuit 160 may step up the voltage of the third voltage line L3_VBUS and may supply the stepped-up voltage to the charging pin 150. Thus each of the voltage cutoff circuit 120, the pin 150, and PMIC 160 are connected via an internal node, in this embodiment third voltage line L3_VBUS.

The power management integrated circuit 160 may include a buck converter BUCK configured to step down a voltage and a boost converter BOOST configured to step up a voltage. The power management integrated circuit 160 may receive the detection signal VDET from the voltage cutoff circuit 120 through a general purpose input and output (GPIO) and may transfer the first control signal CT1 to the voltage cutoff circuit 120.

When the corruption signal CRT received from the corruption detection circuit 130 is activated (e.g., when the corruption signal CRT has an active level), the power management integrated circuit 160 may control the voltage cutoff circuit 120 with the first control signal CT1 such that the first voltage line L1_VBUS and the second voltage line L2_VBUS are electrically disconnected. When the corruption signal CRT received from the corruption detection circuit 130 is deactivated (e.g., when the corruption signal CRT has an inactive level), the power management integrated circuit 160 may control the voltage cutoff circuit 120 with the first control signal CT1 such that the first voltage line L1_VBUS and the second voltage line L2_VBUS are electrically connected.

The second switch 170 may operate in response to a second signal S2 received from the micro control unit 190. In response to the second signal S2, the second switch 170 may electrically connect the power management integrated circuit 160 and the battery 180 or may electrically disconnect the power management integrated circuit 160 from the battery 180.

The battery 180 may operate under control of the power management integrated circuit 160. The battery 180 may be charged by the voltage transferred from the power management integrated circuit 160. The battery 180 may output the charged voltage under control of the power management integrated circuit 160.

The micro control unit 190 may control various operations of the electronic device 100. The micro control unit 190 may be reset when the detection signal VDET is activated. The micro control unit 190 may control the first switch 140 with the first signal S1. The micro control unit 190 may control the second switch 170 with the second signal S2.

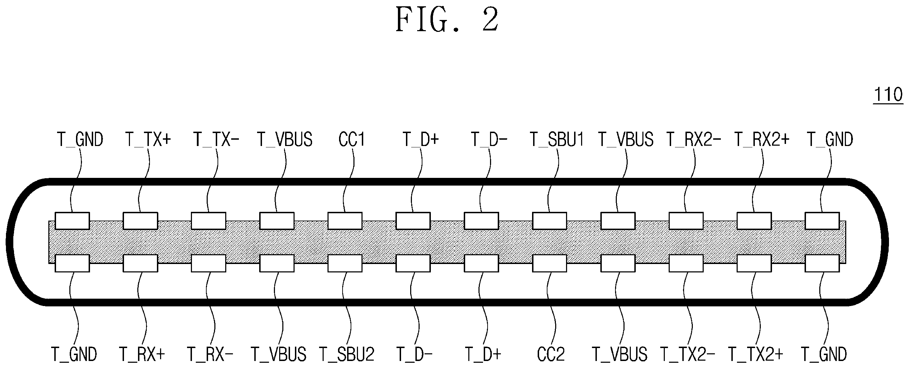

The first switch 140 or the second switch 170 which may be implemented as, for example, a transistor, may have a parasitic diode in a turn-off state. A leakage current may flow due to the parasitic diode. When a parasitic current flows when the connector 110 is corrupted, the connector 110 may be further corroded. The higher a voltage of a voltage terminal T_VBUS (refer to FIG. 2) of the connector 110, the faster the corrosion of the connector 110. To prevent the corrosion due to the parasitic current, the voltage cutoff circuit 120 may be designed to suppress the leakage current. For example, the voltage cutoff circuit 120 may be implemented with an over voltage protection (OVP) circuit. The voltage cutoff circuit 120 may be manufactured with a separate integrated circuit.

When the external voltage is transferred to the third voltage line L3_VBUS, the electronic device 100 may transfer the external voltage to the second external device through the charging pin 150. Because DC-DC conversion such as step-up conversion and step-down conversion is not performed in the process of providing the voltage to the second external device, the electronic device 100 may charge the second external device with high efficiency.

FIG. 2 illustrates an example of the connector 110. Referring to FIGS. 1 and 2, the connector 110 may be based on USB Type-C. Ground terminals T_GND may be connected to the ground lines L_GND of the first external device. Transmit terminals T_TX+ and T_TX-, second transmit terminals T_TX2+ and T_TX2-, receive terminals T_RX+ and T_RX-, and second receive terminals T_RX2+ and T_RX2- are connected with the data lines L_DATA of the first external device. Compatible terminals T_D+ and T_D- may support USB 2.0.

The voltage terminals T_VBUS may be connected with the voltage lines L_VBUS of the first external device. Auxiliary terminals T_SBU1 and T_SBU2 may be connected with the auxiliary lines L_SBU of the first external device. Channel configuration terminals CC1 and CC2 may be used to configure a channel with the first external device.

When the electronic device 100 is implemented with the TWS cradle, the use of the electronic device 100 is limited to basic functions such as a function of charging the second external device, for example, wireless earphones. Accordingly, the electronic device 100 may not communicate with the first external device through the auxiliary terminals T_SBU1 and T_SBU2. The electronic device 100 may use the auxiliary terminals T_SBU1 and T_SBU2 as detection terminals for detecting contaminants.

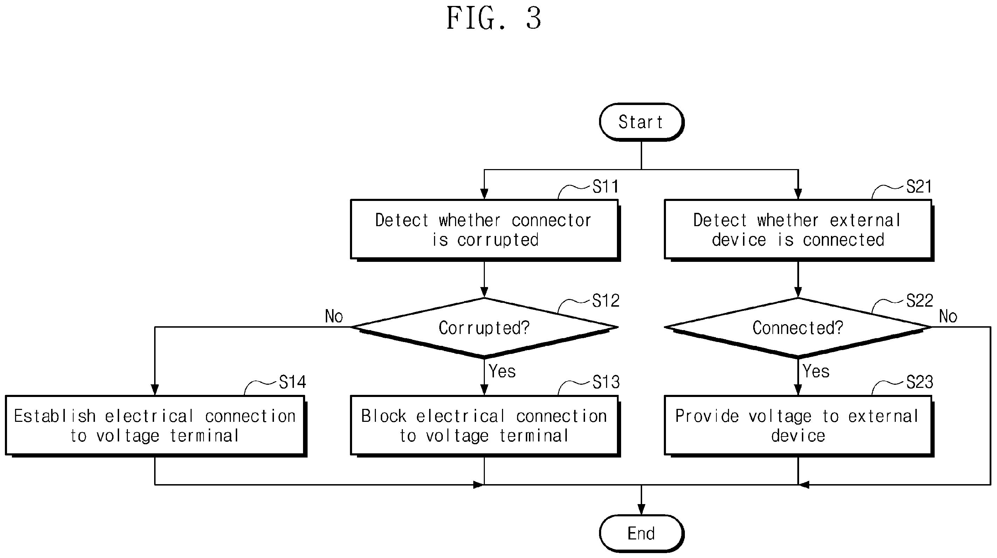

FIG. 3 is a diagram illustrating an example of an operating method of the electronic device 100. Referring to FIGS. 1 and 3, the electronic device 100 may perform corruption management of the connector 110 through operation S11, operation S12, operation S13, and operation S14 and may perform charging management of the second external device through operation S21, operation S22, and operation S23 that are independent of or parallel to operation S11, operation S12, operation S13, and operation S14.

In operation S11, the electronic device 100 may detect whether the connector 110 is corrupted. The electronic device 100 may periodically perform the detection. For example, the power management integrated circuit 160 may detect that the connector 110 is corrupted by monitoring the activation of the corruption signal CRT. Additionally, the power management integrated circuit 160 may detect that the connector 110 is not corrupted (e.g., the connector 110 is clean) by monitoring the deactivation (or maintenance of an inactive state) of the corruption signal CRT.

As another example, the power management integrated circuit 160 may detect the corruption of the connector 110 when an activation pattern of the corruption signal CRT at different detection timings satisfies a given condition. After the corruption of the connector 110 is detected, if the corruption signal CRT remains deactivated or in the inactive state for two or more detection timings, the power management integrated circuit 160 may detect that the corruption of the connector 110 is resolved, indicating that the connector 110 is no longer corrupted.

When it is detected in operation S12 that the connector 110 is corrupted, in operation S13, the electronic device 100 may block the electrical connection with the voltage terminal T_VBUS. For example, the power management integrated circuit 160 may control the first control signal CT1 to activate the voltage cutoff circuit 120. The activated voltage cutoff circuit 120 may electrically disconnect the first voltage line L1_VBUS from the second voltage line L2_VBUS.

When it is detected in operation S12 that the connector 110 is not corrupted, for example, when it is detected that the corruption of the connector 110 is resolved after the connector 110 was corrupted, in operation S14, the electronic device 100 may establish the electrical connection with the voltage terminal T_VBUS. For example, the power management integrated circuit 160 may control the first control signal CT1 to deactivate the voltage cutoff circuit 120. The deactivated voltage cutoff circuit 120 may establish the electrical connection of the first voltage line L1_VBUS and the second voltage line L2_VBUS.

In operation S21, the electronic device 100 may detect whether the second external device is connected with the charging pin 150. When it is detected in operation S22 that the second external device is connected with the charging pin 150, in operation S23, the electronic device 100 may provide the voltage to the second external device. For example, the charging pin 150 may provide the voltage of the third voltage line L3_VBUS to the second external device. When it is detected in operation S22 that the second external device is not connected with the charging pin 150, the electronic device 100 may leave the charging pin 150 unused.

As described above, when the connector 110 is corrupted, the electronic device 100 can block the external voltage by using the separate voltage cutoff circuit 120. Regardless of whether the connector 110 is corrupted or not, the electronic device 100 can charge the second external device as long as the second external device is connected with the charging pin 150.

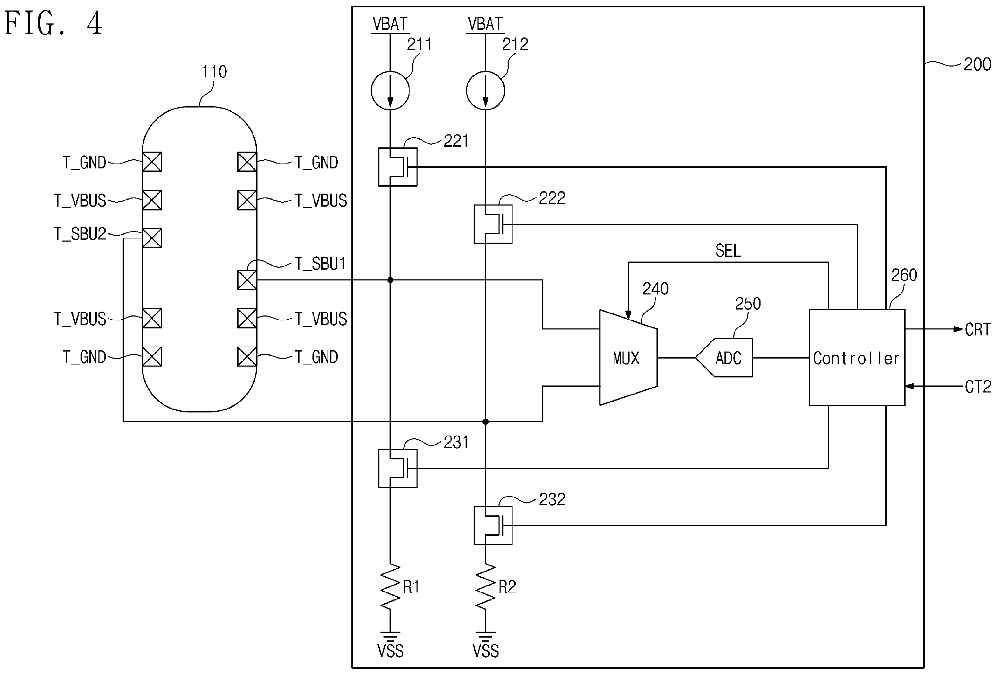

FIG. 4 is a diagram illustrating an example of the connector 110 and a corruption detection circuit 200. The corruption detection circuit 200 may correspond to the corruption detection circuit 130 of FIG. 1. The voltage terminals T_VBUS, ground terminals T_GND, a first auxiliary terminal T_SBU1, and a second auxiliary terminal T_SBU2 of the connector 110 are illustrated in FIG. 4.

The corruption detection circuit 200 may include a first current source 211, a second current source 212, a first pull-up switch 221, a second pull-up switch 222, a first pull-down switch 231, a second pull-down switch 232, a multiplexer 240, an analog-to-digital converter (ADC) 250, and a controller 260.

The first current source 211 may be connected between a node to which a battery voltage VBAT of the battery 180 (refer to FIG. 1) is supplied and the first pull-up switch 221. The second current source 212 may be connected between the node to which the battery voltage VBAT is supplied and the second pull-up switch 222.

The first pull-up switch 221 may be connected between the first current source 211 and the first auxiliary terminal T_SBU1. The first pull-up switch 221 may be turned on or turned off under control of the controller 260. For example, the controller 260 may provide an on or off signal to a gate of the first pull-up switch 221. The second pull-up switch 222 may be connected between the second current source 212 and the second auxiliary terminal T_SBU2. The second pull-up switch 222 may be turned on or turned off under control of the controller 260. For example, the controller 260 may provide an on or off signal to a gate of the second pull-up switch 222.

A first resistor R1 may be connected between the first pull-down switch 231 and a ground node to which a ground voltage VSS is supplied. A second resistor R2 may be connected between the second pull-down switch 232 and the ground node to which the ground voltage VSS is supplied.

The first pull-down switch 231 may be connected between the first auxiliary terminal T_SBU1 and the first resistor R1. The first pull-down switch 231 may be turned on or turned off under control of the controller 260. For example, the controller 260 may provide an on or off signal to a gate of the first pull-down switch 231. The second pull-down switch 232 may be connected between the second auxiliary terminal T_SBU2 and the second resistor R2. The second pull-down switch 232 may be turned on or turned off under control of the controller 260. For example, the controller 260 may provide an on or off signal to a gate of the second pull-down switch 232.

The multiplexer 240 may transfer one of the voltage of the first auxiliary terminal T_SBU1 and the voltage of the second auxiliary terminal T_SBU2 to the analog-to-digital converter 250 in response to a selection signal SEL received from the controller 260. For example, the multiplexer 240 may be an analog multiplexer.

The analog-to-digital converter 250 may convert the voltage level output from the multiplexer 240 into a digital value. The analog-to-digital converter 250 may output the converted digital value to the controller 260.

The controller 260 may enter the detection timing in response to the second control signal CT2. The second control signal CT2 may be provided from the PMIC 160 (refer to FIG. 1). At the detection timing, the controller 260 may perform pull-up detection by activating the first pull-up switch 221 and the second pull-up switch 222 or may perform pull-down detection by activating the first pull-down switch 231 and the second pull-down switch 232. The controller 260 may control the selection signal SEL such that the multiplexer 240 alternately outputs the voltage of the first auxiliary terminal T_SBU1 and the voltage of the second auxiliary terminal T_SBU2.

The controller 260 may receive the digital value from the analog-to-digital converter 250. For example, the controller 260 may sequentially receive the digital value corresponding to the voltage of the first auxiliary terminal T_SBU1 and the digital value corresponding to the voltage of the second auxiliary terminal T_SBU2 from the analog-to-digital converter 250.

The controller 260 may determine whether each of the digital values indicates a corruption state. When any one of the digital values indicates the corruption state, the controller 260 may activate the corruption signal CRT. When both of the digital values do not indicate the corruption state, the controller 260 may deactivate the corruption signal CRT.

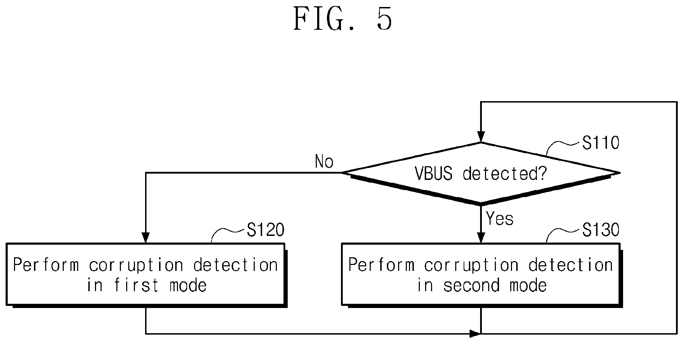

FIG. 5 is a diagram illustrating an example in which the electronic device 100 performs corruption detection in different manners. Referring to FIGS. 1, 4, and 5, in operation S110, the electronic device 100 may determine whether an external voltage VBUS is detected. For example, when the detection signal VDET is in an inactive state, the power management integrated circuit 160 may determine that the external voltage VBUS is not detected. In operation S120, the power management integrated circuit 160 may control the corruption detection circuit 130 through the second control signal CT2 such that corruption detection is performed in a first mode. For example, in the first mode, the corruption detection circuit 130 may perform corruption detection in a pull-up manner.

When the detection signal VDET is in an active state, the power management integrated circuit 160 may determine that the external voltage VBUS is detected. In operation S130, the power management integrated circuit 160 may control the corruption detection circuit 130 through the second control signal CT2 such that corruption detection is performed in a second mode. For example, in the second mode, the corruption detection circuit 130 may perform corruption detection in a pull-down manner.

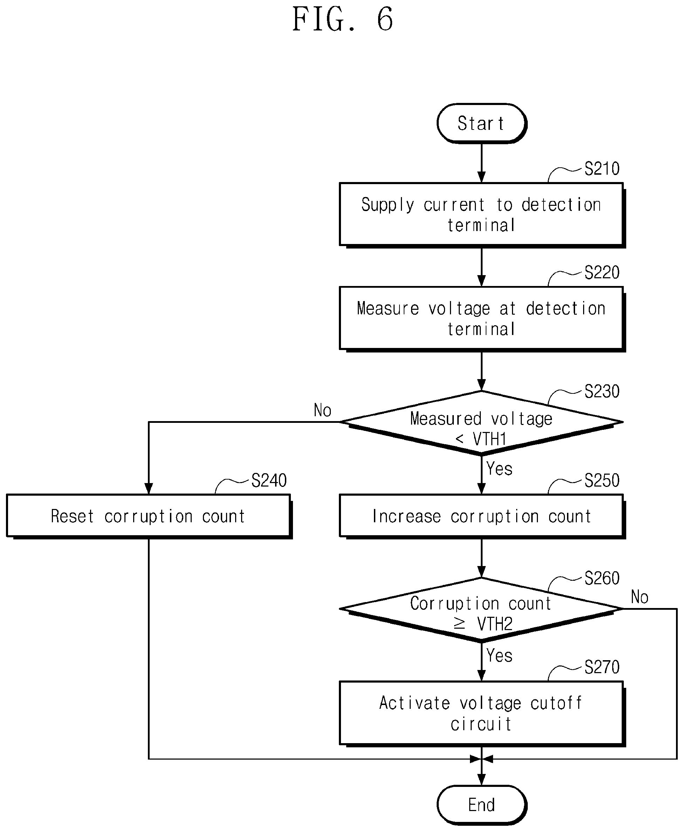

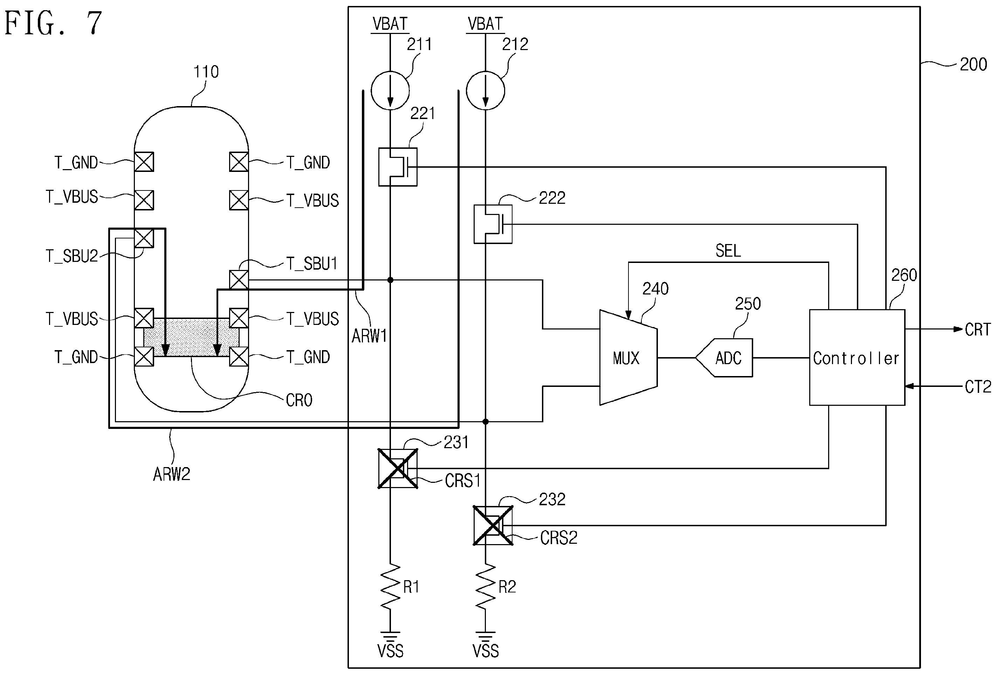

FIG. 6 is a diagram illustrating an example in which the electronic device 100 performs corruption detection in a pull-up manner. FIG. 7 is a diagram illustrating a process in which corruption detection of a pull-up manner is performed in the connector 110 and the corruption detection circuit 200 according to a method of FIG. 6.

Referring to FIGS. 1, 6, and 7, as marked by a first cross CRS1, a second cross CRS2, a first arrow ARW1, and a second arrow ARW2, the corruption detection circuit 130 may turn on the first pull-up switch 221 and the second pull-up switch 222 and may turn off the first pull-down switch 231 and the second pull-down switch 232; in this case, in operation S210, the corruption detection circuit 200 may supply a current to a detection terminal (e.g., including the first auxiliary terminal T_SBU1 and the second auxiliary terminal T_SBU2).

In operation S220, the corruption detection circuit 130 may measure a voltage of the detection terminal (e.g., including the first auxiliary terminal T_SBU1 and the second auxiliary terminal T_SBU2). As illustrated in FIG. 7, when an electrical path is formed between the first auxiliary terminal T_SBU1 or the second auxiliary terminal T_SBU2 and the ground terminal T_GND due to a contaminant CRO, a current may be leaked out due to the contaminant CRO, and thus, the voltage of the first auxiliary terminal T_SBU1 or the second auxiliary terminal T_SBU2 may decrease.

In operation S230, the controller 260 may determine whether the measured voltage is smaller than a first threshold value VTH1. In an embodiment, each of the first current source 211 and the second current source 212 may output a current of 1 µA. When the voltage of the first auxiliary terminal T_SBU1 or the second auxiliary terminal T_SBU2 is smaller than 650 mV, the controller 260 may determine that the contaminant CRO exists and may activate the corruption signal CRT.

When the measured voltage is smaller than the first threshold value VTH1 (e.g., 650 mV), and the corruption signal CRT is activated, in operation S250, the power management integrated circuit 160 may increase a corruption count. In operation S260, the power management integrated circuit 160 may determine whether the corruption count is equal to or greater than a second threshold value VTH2. When the corruption count is equal to or greater than the second threshold value VTH2, in operation S270, the power management integrated circuit 160 may activate the voltage cutoff circuit 120. When the corruption count is smaller than the second threshold value VTH2, the power management integrated circuit 160 may not activate the voltage cutoff circuit 120.

When the measured voltage is not smaller than the first threshold value VTH1 (e.g., 650 mV), in other words, when the measured voltage is equal to or greater than the first threshold value VTH1, in operation S240, the power management integrated circuit 160 may reset the corruption count.

The electronic device 100 may periodically perform the corruption detection of FIG. 6 when the connector 110 is not corrupted and the external voltage VBUS does not exist. The corruption detection of FIG. 6 may be performed, for example, at a period of 20 ms. When corruption is detected as much as and more than the second threshold value VTH2, the electronic device 100 may determine the presence of corruption and activate the voltage cutoff circuit 120. In an embodiment, the second threshold value VTH2 may be "3".

In FIGS. 6 and 7, the description is given that the corruption detection circuit 200 turns on the first pull-up switch 221 and the second pull-up switch 222 at the same time. However, the corruption detection circuit 200 may alternately turn on the first pull-up switch 221 and the second pull-up switch 222, during corruption detection. For example, the controller 260 may turn on the first pull-up switch 221 and may control the multiplexer 240 such that the voltage of the first auxiliary terminal T_SBU1 is output. Afterwards, the controller 260 may turn on the second pull-up switch 222 and may control the multiplexer 240 such that the voltage of the second auxiliary terminal T_SBU2 is output. The timing to turn on the first pull-up switch 221 and the second pull-up switch 222 and the timing to control the multiplexer 240 may be performed in reverse order.

As another example, during corruption detection, the corruption detection circuit 200 may activate just one of the first pull-up switch 221 and the second pull-up switch 222. In other words, the corruption detection circuit 200 may perform corruption detection by using just one of the first auxiliary terminal T_SBU1 and the second auxiliary terminal T_SBU2.

As another example, the corruption detection circuit 200 may perform the corruption detection while alternately selecting the first auxiliary terminal T_SBU1 and the second auxiliary terminal T_SBU2 at different detection timings (e.g., at consecutive detection timings).

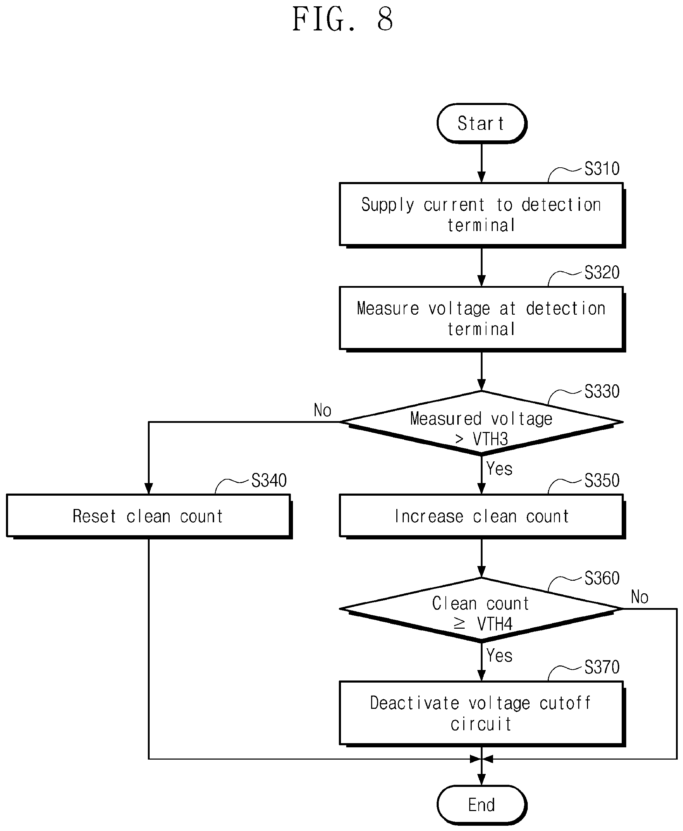

FIG. 8 is a diagram illustrating an example in which after the connector 110 is corrupted, the electronic device 100 detects whether the corruption is removed in a pull-up manner. Referring to FIGS. 1, 7, and 8, in operation S310, the corruption detection circuit 130 or 200 may supply a current to a detection terminal. In operation S320, the corruption detection circuit 130 or 200 may measure a voltage at a detection terminal. Operation S310 and operation S320 may be identical to operation S210 and operation S220 of FIG. 6. The description given with reference to operation S210 and operation S210 of FIG. 6 may be identically applied to operation S310 and operation S320 of FIG. 8.

In operation S330, the controller 260 of the corruption detection circuit 130 or 200 determines whether the measured voltage is greater than a third threshold value VTH3. When the voltage of the first auxiliary terminal T_SBU1 or the second auxiliary terminal T_SBU2 is greater than 850 mV, the controller 260 may determine that the contaminant CRO is removed and may deactivate the corruption signal CRT.

When the measured voltage is greater than the third threshold value VTH3 (e.g., 850 mV), in response to deactivation of the corruption signal CRT, in operation S350, the power management integrated circuit 160 may increase a clean count. In operation S360, the power management integrated circuit 160 may determine whether the clean count is equal to or greater than a fourth threshold value VTH4. When the clean count is equal to or greater than the fourth threshold value VTH4, in operation S370, the power management integrated circuit 160 may deactivate the voltage cutoff circuit 120. When the clean count is smaller than the fourth threshold value VTH4, the power management integrated circuit 160 may not deactivate the voltage cutoff circuit 120.

When the measured voltage is not greater than the third threshold value VTH3 (e.g., 850 mV), in other words, when the measured voltage is equal to or smaller than the fourth threshold value VTH4, in operation S340, the power management integrated circuit 160 may reset the clean count.

The electronic device 100 may periodically perform the corruption removal detection of FIG. 8 when the connector 110 is corrupted and the external voltage VBUS does not exist. The corruption removal detection of FIG. 8 may be performed, for example, at a period of 10 s. When the clean count is equal to or exceeds the fourth threshold value VTH4, the electronic device 100 may determine that the connector 110 is no longer corrupted and may deactivate the voltage cutoff circuit 120. In an embodiment, the fourth threshold value VTH4 may be "3".

As described with reference to FIG. 6, the corruption detection circuit 200 may perform corruption removal detection by alternately activating the first pull-up switch 221 and the second pull-up switch 222, by activating one of the first pull-up switch 221 and the second pull-up switch 222, or by alternately activating the first pull-up switch 221 and the second pull-up switch 222 at different detection timings.

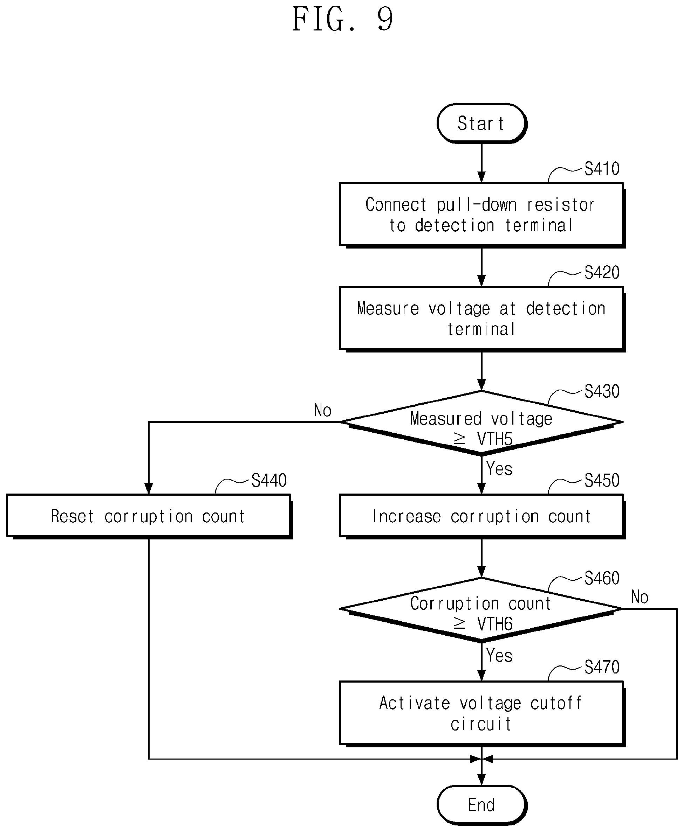

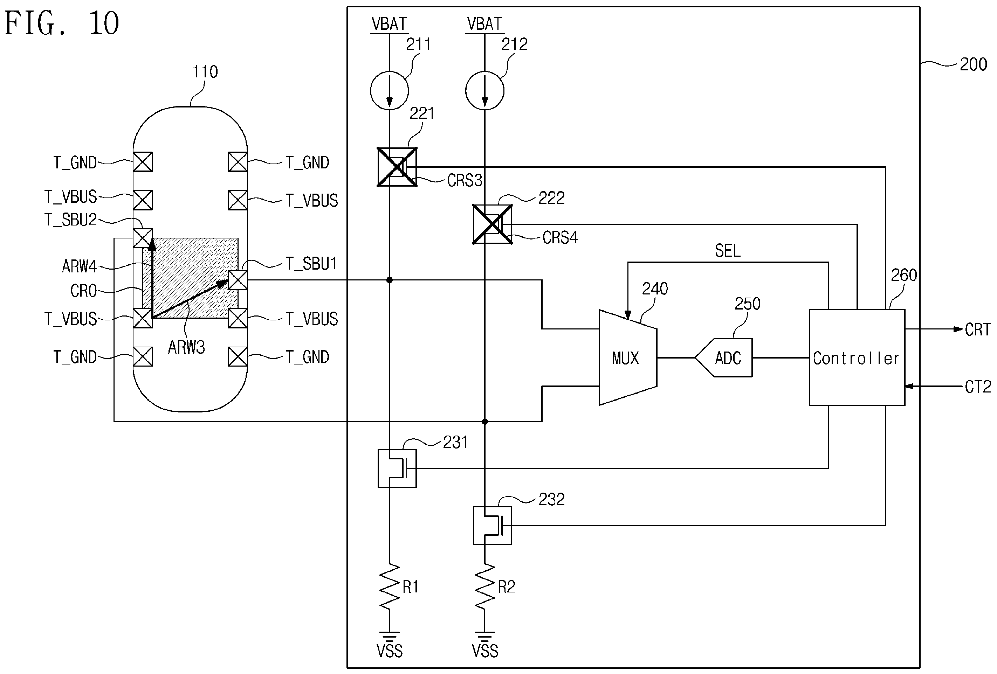

FIG. 9 is a diagram illustrating an example in which the electronic device 100 performs corruption detection in a pull-down manner. FIG. 10 is a diagram illustrating a process in which corruption detection of a pull-down manner is performed in the connector 110 and the corruption detection circuit 200 according to a method of FIG. 9.

Referring to FIGS. 1, 9, and 10, as marked by a third cross CRS3, a fourth cross CRS4, a third arrow ARW3, and a fourth arrow ARW4, the corruption detection circuit 200 may turn on the first pull-down switch 231 and the second pull-down switch 232 and may turn off the first pull-up switch 221 and the second pull-up switch up 222; in this case, in operation S410, the corruption detection circuit 200 may connect a pull-down resistor (e.g., including the first resistor R1 and the second resistor R2) with a detection terminal (e.g., including the first auxiliary terminal T_SBU1 and the second auxiliary terminal T_SBU2).

In operation S420, the corruption detection circuit 130 may measure a voltage of the detection terminal (e.g., including the first auxiliary terminal T_SBU1 and the second auxiliary terminal T_SBU2). As illustrated in FIG. 10, when an electrical path is formed between at least one of the voltage terminals T_VBUS and the first auxiliary terminal T_SBU1 or the second auxiliary terminal T_SBU2 due to the contaminant CRO, a current may flow due to the contaminant CRO, and thus, the voltage of the first auxiliary terminal T_SBU1 or the second auxiliary terminal T_SBU2 may increase.

In operation S430, the controller 260 may determine whether the measured voltage is equal to or higher than a fifth threshold value VTH5. In an embodiment, each of the first resistor R1 and the second resistor R2 may have a resistance value of 2 MΩ. When the voltage of the first auxiliary terminal T_SBU1 or the second auxiliary terminal T_SBU2 is equal than or greater than 500 mV, the controller 260 may determine that the contaminant CRO exists and may activate the corruption signal CRT.

When the measured voltage is equal to or greater than the fifth threshold value VTH5 (e.g., 500 mV), in response to the activation of the corruption signal CRT, in operation S450, the power management integrated circuit 160 may increase a corruption count. In operation S460, the power management integrated circuit 160 may determine whether the corruption count is equal to or greater than a sixth threshold value VTH6. When the corruption count is equal to or greater than the sixth threshold value VTH6, in operation S470, the power management integrated circuit 160 may activate the voltage cutoff circuit 120. When the corruption count is smaller than the sixth threshold value VTH6, the power management integrated circuit 160 may not activate the voltage cutoff circuit 120.

When the measured voltage is not equal to or greater than the fifth threshold value VTH5 (e.g., 500 mV), in other words, when the measured voltage is smaller than the fifth threshold value VTH5, in operation S440, the power management integrated circuit 160 may reset the corruption count.

The electronic device 100 may periodically perform the corruption detection of FIG. 9 in a state where the connector 110 is not corrupted and the external voltage VBUS exists. The corruption detection of FIG. 9 may be performed, for example, at a period of 20 ms. If the corruption count is equal to or greater than the sixth threshold value VTH6, the electronic device 100 will determine that corruption is present and activate the voltage cutoff circuit 120. In an embodiment, the sixth threshold value VTH6 may be "3".

In FIGS. 9 and 10, the description is given that the corruption detection circuit 200 turns on the first pull-down switch 231 and the second pull-down switch 232 at the same time. However, the corruption detection circuit 200 may alternately turn on the first pull-down switch 231 and the second pull-down switch 232, during corruption detection. For example, the controller 260 may turn on the first pull-down switch 231 and may control the multiplexer 240 such that the voltage of the first auxiliary terminal T_SBU1 is output. Afterwards, the controller 260 may turn on the second pull-down switch 232 and may control the multiplexer 240 such that the voltage of the second auxiliary terminal T_SBU2 is output. The timing to turn on the first pull-down switch 231 and the second pull-down switch 232 and the timing to control the multiplexer 240 may be performed in reverse order.

As another example, at the detection timing, the corruption detection circuit 200 may activate one of the first pull-down switch 231 and the second pull-down switch 232 and may not activate the other of the first pull-down switch 231 and the second pull-down switch 232. In other words, the corruption detection circuit 200 may perform the corruption detection by using one of the first auxiliary terminal T_SBU1 and the second auxiliary terminal T_SBU2.

As another example, the corruption detection circuit 200 may perform the corruption detection while alternately selecting the first auxiliary terminal T_SBU1 and the second auxiliary terminal T_SBU2 at different detection timings (e.g., at consecutive detection timings).

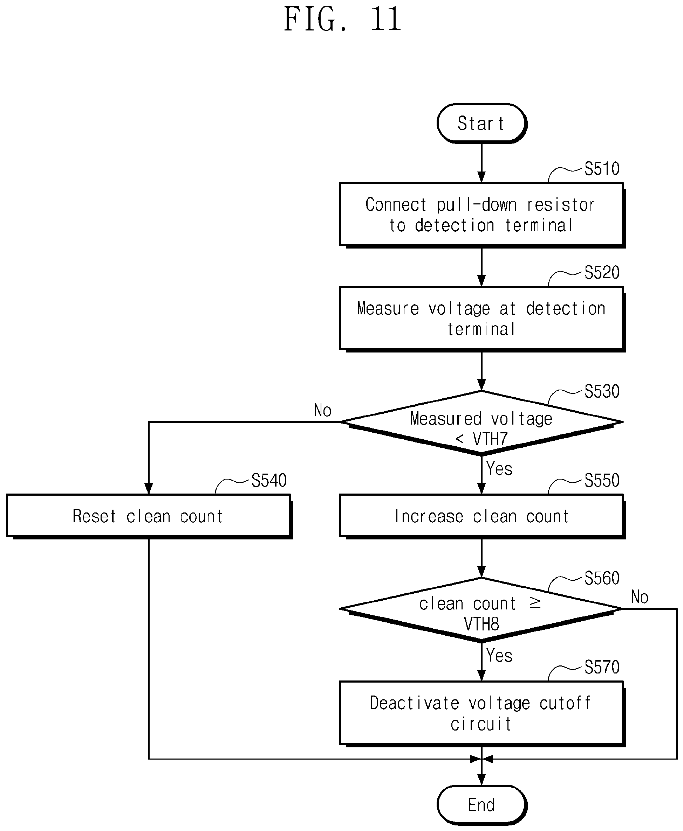

FIG. 11 is a diagram illustrating an example in which after the connector 110 is corrupted, the electronic device 100 detects whether the corruption is removed in a pull-down manner. Referring to FIGS. 1, 10, and 11, in operation S510, the corruption detection circuit 130 or 200 may connect a detection terminal with a pull-down resistor. In operation S520, the corruption detection circuit 130 or 200 may measure a voltage at the detection terminal. Operation S510 and operation S520 may be identical to operation S410 and operation S420 of FIG. 9. The description given with reference to operation S410 and operation S420 of FIG. 9 may be identically applied to operation S510 and operation S520 of FIG. 11.

In operation S530, the corruption detection circuit 130 or 200, in other words, the controller 260 may determine whether the measured voltage is smaller than a seventh threshold value VTH7. When the voltage of the first auxiliary terminal T_SBU1 or the second auxiliary terminal T_SBU2 is smaller than for example 300 mV, the controller 260 may determine that the contaminant CRO is removed and may deactivate the corruption signal CRT.

When the measured voltage is smaller than the seventh threshold value VTH7 (e.g., 300 mV), in response to the deactivation of the corruption signal CRT, in operation S550, the power management integrated circuit 160 may increase a clean count. In operation S560, the power management integrated circuit 160 may determine whether the clean count is equal to or greater than an eighth threshold value VTH8. When the clean count is equal to or greater than the eighth threshold value VTH8, in operation S570, the power management integrated circuit 160 may deactivate the voltage cutoff circuit 120. When the clean count is smaller than the eighth threshold value VTH8, the power management integrated circuit 160 may not deactivate the voltage cutoff circuit 120.

When the measured voltage is not smaller than the seventh threshold value VTH7 (e.g., 300 mV), in other words, when the measured voltage is equal to or greater than the eighth threshold value VTH8, in operation S540, the power management integrated circuit 160 may reset the clean count.

The electronic device 100 may periodically perform the corruption removal detection of FIG. 11 in a state where the connector 110 is corrupted and the external voltage VBUS exists. The corruption removal detection of FIG. 11 may be performed, for example, at a period of 10 s. When the clean count continues to be detected as much as or greater than the eighth threshold value VTH8, the electronic device 100 may determine that the connector 110 is no longer corrupted and deactivate the voltage cutoff circuit 120. In an embodiment, the eighth threshold value VTH8 may be "3".

Like that described with reference to FIG. 9, as pertains to FIG. 11, the corruption detection circuit 200 may perform corruption removal detection by alternately activating the first pull-down switch 231 and the second pull-down switch 232, by activating one of the first pull-down switch 231 and the second pull-down switch 232, or by alternately activating the first pull-down switch 231 and the second pull-down switch 232 at different detection timings.

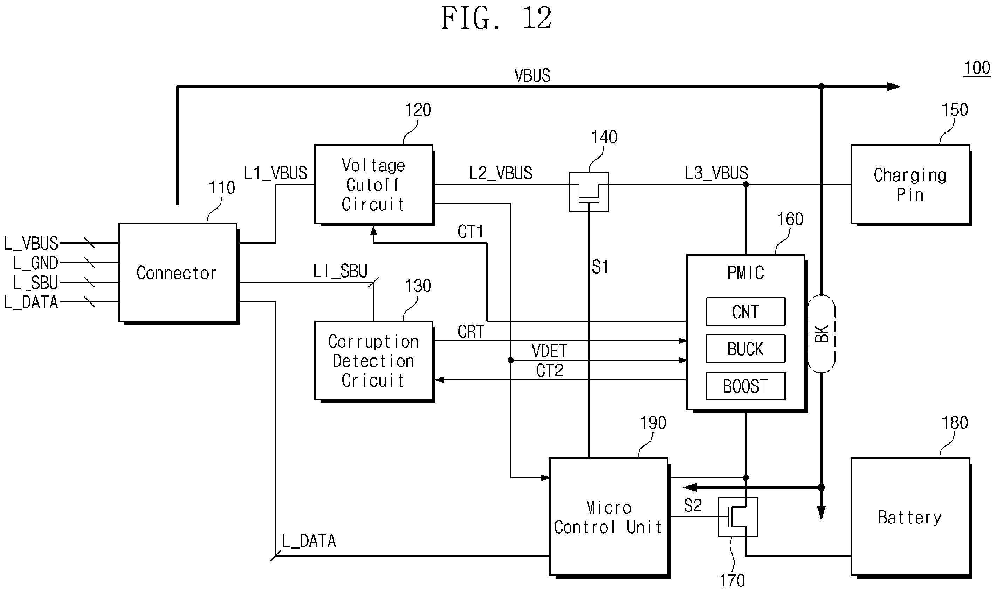

FIG. 12 is a diagram illustrating an example in which the electronic device 100 operates when the external voltage VBUS exists and the connector 110 is not corrupted. Referring to FIG. 12, the electronic device 100 may provide the external voltage VBUS to the second external device through the charging pin 150. Because the external voltage VBUS is provided to the second external device without step-up or step-down conversion, the efficiency at which the second external device is charged is improved. In addition, by using the external voltage VBUS (e.g., by stepping down (or buck converting BK) the external voltage VBUS), the electronic device 100 may power the micro control unit 190 and may charge the battery 180. FIG. 12 further illustrates that the PMIC 160 includes a counter CNT. The counter CNT is used to increase the clean count and the corruption count in the methods described above.

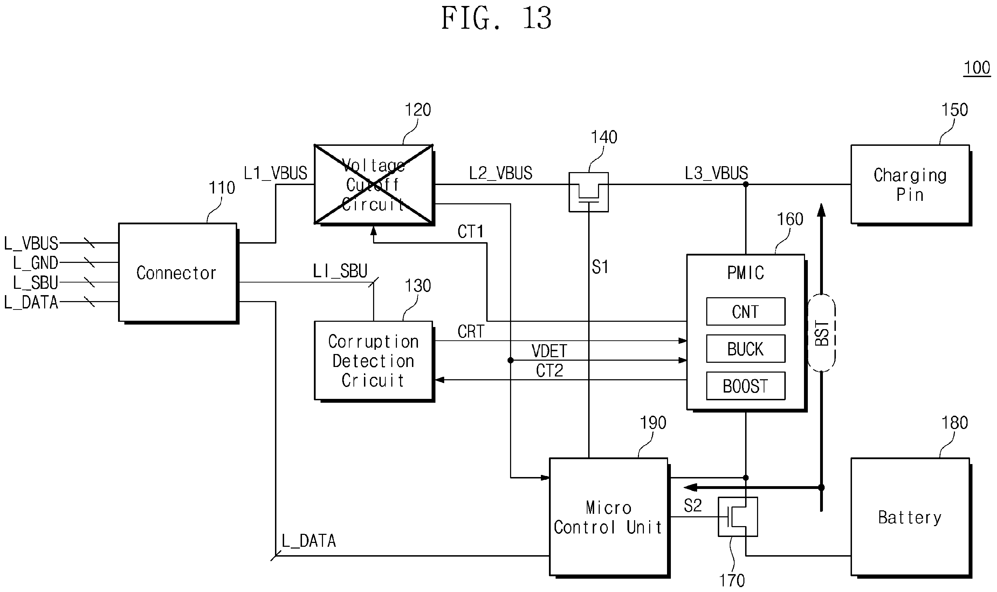

FIG. 13 is a diagram illustrating an example in which the electronic device 100 operates when the connector 110 is corrupted. The electronic device 100 may activate the voltage cutoff circuit 120 irrespective of whether the external voltage VBUS exists. The electronic device 100 may supply the power to the micro control unit 190 by using the voltage charged in the battery 180 and may power the second external device by using the voltage charged in the battery 180 (e.g., by stepping up (or boost converting BST) the voltage).

Since the voltage cutoff circuit 120 is activated irrespective of whether the external voltage VBUS exists, even though the first external device is connected with the connector 110 and the external voltage VBUS starts to be newly supplied, the connector 110 may be prevented from being corroded.

In the above embodiments, components according to the present disclosure are described by using the terms "first", "second", "third", etc. However, the terms "first", "second", "third", etc., may be used to distinguish components from each other and do not limit the present disclosure. For example, the terms "first", "second", "third", etc., do not involve any particular order or a numerical meaning of any form.

In the above description, components according to embodiments of the present disclosure are referenced by using blocks. The blocks may be implemented with various hardware devices, such as an integrated circuit, an application specific IC (ASIC), a field programmable gate array (FPGA), and a complex programmable logic device (CPLD), firmware driven in hardware devices, software such as an application, or a combination of a hardware device and software. Additionally, the blocks may include circuits implemented with semiconductor elements in an integrated circuit, or circuits functioning as an intellectual property (IP).

According to the present disclosure, an electronic device is connected with a first external device through a voltage cutoff circuit and activates the voltage cutoff circuit when corruption is detected. Accordingly, an electronic device that prevents a connector from being corroded and charges a second external device irrespective of corruption and an operating method of the electronic device are provided.

While the present disclosure has been described with reference to embodiments thereof, it will be apparent to those of ordinary skill in the art that various changes and modifications may be made thereto without departing from the scope of the invention as set forth in the following claims.

## Claims

1. An electronic device comprising:
a connector (110) for connecting to a first external device, the connector including a voltage terminal (T_VBUS), a detection terminal (T_SBU1, T_SBU2), and a data terminal;
a battery (180);
a corruption detection circuit (130) configured to detect whether the connector (110) is corrupted;
a voltage cutoff circuit (120) connected with the voltage terminal (T_VBUS) of the connector (110), and configured to electrically connect the voltage terminal (T_VBUS)with an internal node (L3_VBUS) when corruption of the connector (110) is not detected by the corruption detection circuit (130) and to electrically disconnect the voltage terminal (T_VBUS) from the internal node (L3_VBUS) when the corruption is detected by the corruption detection circuit (130);
a charging pin (150) connected with the internal node (L3_VBUS), and configured to transfer a voltage of the internal node to a second external device when the charging pin (150) is connected with the external device, irrespective of whether the corruption is detected; and
a power management integrated circuit (160) connected between the internal node (L3_VBUS) and the battery (180), and configured to charge the battery (180) by using the voltage of the internal node or to generate the voltage of the internal node (L3_VBUS) by using a voltage of the battery (180),
wherein the corruption detection circuit (130) is configured to detect whether the connector (110) is corrupted using different techniques, according to whether an external voltage is supplied through the voltage terminal (T_VBUS),
when the external voltage is not supplied through the voltage terminal (T_VBUS), the corruption detection circuit (130) is configured to:
supply a current to the detection terminal; and
detect whether the connector (110) is corrupted, based on a voltage of the detection terminal, wherein, when the voltage of the detection terminal (T_SBU1, T_SBU2) is less than a first threshold value (VTH1), the corruption detection circuit (130) is configured to detect that the connector (110) is corrupted.

2. The electronic device of claim 1, wherein the corruption detection circuit (130) includes an over voltage protection (OVP) circuit.

3. The electronic device of claim 1 or 2, wherein the voltage cutoff circuit (120) is configured to:
detect whether the external voltage is supplied through the voltage terminal (T_VBUS); and
transfer a signal indicating that the external voltage is supplied, to the corruption detection circuit (130).

4. The electronic device of claim 1, 2 or 3, wherein the corruption detection circuit (130) is configured to:
periodically supply the current to the detection terminal (T_SBU1, T_SBU2); and
detect that the connector (110) is corrupted, when the voltage of the detection terminal (T_SBU1, T_SBU2) has been continuously measured to be less than the first threshold value a number of times greater than or equal to a second threshold value (VTH2).

5. The electronic device of any one of claims 1 to 4, wherein, after the corruption detection circuit (130) periodically supplies the current to the detection terminal and detects that the connector (110) is corrupted, when the voltage of the detection terminal is greater than a third threshold value (VTH3), the corruption detection circuit (130) is configured to determine that the connector (110) is no longer corrupted.

6. The electronic device of any one of claims 1 to 5 wherein the corruption detection circuit (130) periodically supplies the current to the detection terminal, and
wherein, after detecting that the connector (110) is corrupted, the corruption detection circuit (130) is configured to determine that the connector (110) is no longer corrupted, when the voltage of the detection terminal has been continuously measured to be smaller than a third threshold value a number of times greater than or equal to a fourth threshold value.

7. The electronic device of any one of claims 1 to 6, wherein, when the external voltage is supplied through the voltage terminal (T_VBUS), the corruption detection circuit (130) is configured to:
connect the detection terminal with a ground node through a resistor; and
detect whether the connector (110) is corrupted, based on a voltage of the detection terminal.

8. The electronic device of claim 7, wherein the corruption detection circuit (130) is configured to:
periodically connect the detection terminal with the ground node through the resistor; and
detect that the connector (110) is corrupted, when the voltage of the detection terminal has been continuously measured to be equal to or greater than a fifth threshold value (VTH5) a number of times greater than or equal to a sixth threshold value (VTH6).

9. The electronic device of claim 7 or 8, wherein the corruption detection circuit (130) periodically connects the detection terminal with the ground node through the resistor, and
wherein, after detecting that the connector (110) is corrupted, the corruption detection circuit (130) determines the corruption of the connector (110) is not detected, when the voltage of the detection terminal has been continuously measured to be smaller than a seventh threshold value (VTH7) a number of times greater than or equal to a eighth threshold value (VTH8).

10. The electronic device of any one of claims 1 to 9, further comprising:
a micro control unit connected with the data terminal of the connector (110), and configured to receive a signal indicating whether the external voltage is supplied from the voltage cutoff circuit (120) and to perform a reset operation when the external voltage is supplied.

11. The electronic device of any one of claims 1 to 10, wherein, when an external voltage is supplied to the voltage terminal (T_VBUS) and the corruption is not detected by the corruption detection circuit (130), the charging pin (150) is configured to transfer the external voltage to the external device, and the power management integrated circuit (160) is configured to step down the external voltage to be transferred to the battery (180), and
wherein, when the external voltage is supplied to the voltage terminal (T_VBUS) and the corruption is detected by the corruption detection circuit (130), the power management integrated circuit (160) is configured to transfer a voltage of the battery (180) to the charging pin (150), and the charging pin (150) is configured to transfer the voltage from the power management integrated circuit (160) to the external device.

12. The electronic device of any one of claims 1 to 11, wherein, when an external voltage is not applied from the voltage cutoff circuit (120) to the internal node (L3_VBUS), the power management integrated circuit (160) is configured to step up a voltage of the battery (180) to be transferred to the charging pin (150), and the charging pin (150) is configured to transfer the stepped-up voltage to the external device.

## Patentansprüche

1. Elektronische Vorrichtung, umfassend:
einen Steckverbinder (110) zum Verbinden mit einer ersten externen Vorrichtung, wobei der Steckverbinder einen Spannungsanschluss (T_VBUS), einen Erkennungsanschluss (T_SBU1, T_SBU2), und einen Datenanschluss beinhaltet;
eine Batterie (180);
eine Beschädigungserkennungsschaltung (130), die konfiguriert ist, um zu erkennen, ob der Steckverbinder (110) beschädigt ist;
eine Spannungsabschaltschaltung (120), die mit dem Spannungsanschluss (T_VBUS) des Steckverbinders (110) verbunden ist und konfiguriert, um den Spannungsanschluss (T_VBUS) elektrisch mit einem internen Knoten (L3_VBUS) zu verbinden, wenn von der Beschädigungserkennungsschaltung (130) keine Beschädigung des Steckverbinders (110) erkannt wird, und um den Spannungsanschluss (T_VBUS) vom internen Knoten (L3_VBUS) elektrisch zu trennen, wenn die Beschädigung durch die Beschädigungsserkennungsschaltung (130) erkannt wird;
einen Ladestift (150), der mit dem internen Knoten (L3_VBUS) verbunden ist und konfiguriert ist, um eine Spannung des internen Knotens an eine zweite externe Vorrichtung zu übertragen, wenn der Ladestift (150) mit der externen Vorrichtung verbunden ist, unabhängig davon, ob die Beschädigung erkannt wird; und
eine integrierte Schaltung (160) für Leistungsmanagement, die zwischen dem internen Knoten (L3_VBUS) und der Batterie (180) verbunden ist, und konfiguriert ist, um die Batterie (180) unter Verwendung der Spannung des internen Knotens zu laden, oder die Spannung des internen Knotens (L3_VBUS) durch Verwendung einer Spannung der Batterie (180) zu generieren,
wobei die Beschädigungserkennungsschaltung (130) konfiguriert ist, um unter Verwendung verschiedener Techniken zu erkennen, ob der Steckverbinder (110) je nachdem beschädigt ist, ob eine externe Spannung über den Spannungsanschluss (T_VBUS) zugeführt wird,
wenn keine externe Spannung über den Spannungsanschluss (T_VBUS) zugeführt wird, die Beschädigungskennungsschaltung (130) konfiguriert ist, um:
dem Erkennungsanschluss Strom zuzuführen; und
basierend auf einer Spannung am Erkennungsanschluss zu erkennen, ob der Steckverbinder (110) beschädigt ist, wobei, wenn die Spannung am Erkennungsanschluss (T_SBU1, T_SBU2) geringer ist als ein erster Schwellenwert (VTH1) ist, ist die Beschädigungserkennungsschaltung (130) konfiguriert, um zu erkennen, dass der Steckverbinder (110) beschädigt ist.

2. Elektronische Vorrichtung nach Anspruch 1, wobei Beschädigungserkennungsschaltung (130) eine Schaltung zum Schutz vor Überspannung (OVP) beinhaltet.

3. Elektronische Vorrichtung nach Anspruch 1 oder 2, wobei die Spannungsabschaltschaltung (120) konfiguriert ist, um:
zu erkennen, ob die externe Spannung über den Spannungsanschluss (T_VBUS) zugeführt wird; und
ein Signal, das angibt, dass die externe Spannung zugeführt wird, an die Beschädigungserkennungsschaltung (130) zu übertragen.

4. Elektronische Vorrichtung nach Anspruch 1, 2 oder 3, wobei die Beschädigungserkennungsschaltung (130) konfiguriert ist, um:
dem Erkennungsanschluss (T_SBU1, T_SBU2) periodisch den Strom zuzuführen; und
zu erkennen, dass der Steckverbinder (110) beschädigt ist, wenn die Spannung am Erkennungsanschluss (T_SBU1, T_SBU2) kontinuierlich gemessen wurde, um eine Anzahl von Malen, die größer oder gleich einem zweiten Schwellenwert (VTH2) ist, geringer als der erste Schwellenwert zu sein.

5. Elektronische Vorrichtung nach einem der Ansprüche 1 bis 4, wobei, nachdem die Beschädigungserkennungsschaltung (130) dem Erkennungsanschluss periodisch Strom zugeführt hat und erkennt, dass der Steckverbinder (110) beschädigt ist, und wenn die Spannung am Erkennungsanschluss größer als ein dritter Schwellenwert (VTH3) ist, die Beschädigungserkennungsschaltung (130) konfiguriert ist, um zu bestimmen, dass der Steckverbinder (110) nicht mehr beschädigt ist.

6. Elektronische Vorrichtung nach einem der Ansprüche 1 bis 5, wobei die Beschädigungserkennungsschaltung (130) dem Erkennungsanschluss periodisch Strom zuführt, und
wobei nach Erkennen, dass der Steckverbinder (110) beschädigt ist, die Beschädigungserkennungsschaltung (130) konfiguriert ist, um zu bestimmen, dass der Steckverbinder (110) nicht mehr beschädigt ist, wenn die Spannung des Erkennungsanschlusses kontinuierlich gemessen wird und eine Anzahl von Malen, die größer oder gleich einem vierten Schwellenwert ist, geringer als ein dritter Schwellenwert ist.

7. Elektronische Vorrichtung nach einem der Ansprüche 1 bis 6, wobei, wenn eine externe Spannung über den Spannungsanschluss (T_VBUS) zugeführt wird, die Beschädigungskennungsschaltung (130) konfiguriert ist, um:
den Erkennungsanschluss über einen Widerstand mit einem Masseknoten zu verbinden; und
basierend auf einer Spannung des Erkennungsanschlusses zu erkennen, ob der Steckverbinder (110) beschädigt ist.

8. Elektronische Vorrichtung nach Anspruch 7, wobei die Beschädigungserkennungsschaltung (130) konfiguriert ist, um:
den Erkennungsanschluss periodisch über den Widerstand mit dem Masseknoten zu verbinden; und
zu erkennen, dass der Steckverbinder (110) beschädigt ist, wenn die Spannung am Erkennungsanschluss kontinuierlich gemessen wurde, um eine Anzahl von Malen, die größer oder gleich sechsten Schwellenwert (VTH6) ist, größer als oder gleich wie ein fünfter Schwellenwert (VTH5) zu sein.

9. Elektronische Vorrichtung nach Anspruch 7 oder 8, wobei die Beschädigungserkennungsschaltung (130) den Erkennungsanschluss periodisch über den Widerstand mit dem Masseknoten verbindet, und
wobei nach Erkennen, dass der Steckverbinder (110) beschädigt ist, die Beschädigungserkennungsschaltung (130) bestimmt, dass die Beschädigung des Steckverbinder (110) nicht erkannt wird, wenn die Spannung des Erkennungsanschluss kontinuierlich gemessen wird und eine Anzahl von Malen, die größer oder gleich einem achten Schwellenwert (VTH8) ist, geringer als ein siebter Schwellenwert (VTH7) ist.

10. Elektronische Vorrichtung nach einem der Ansprüche 1 bis 9, weiter umfassend:
eine Mikrosteuereinheit, die mit dem Datenanschluss des Steckverbinders (110) verbunden ist und konfiguriert ist, um ein Signal zu empfangen, das angibt, ob die externe Spannung von der Spannungsabschaltschaltung (120) zugeführt wird, und um einen Rücksetzvorgang durchzuführen, wenn die externe Spannung zugeführt wird.

11. Elektronische Vorrichtung nach einem der Ansprüche 1 bis 10, wobei, wenn dem Spannungsanschluss (T_VBUS) eine externe Spannung zugeführt wird, und die Beschädigung von der Beschädigungserkennungsschaltung (130) nicht erkannt wird, der Ladestift (150) konfiguriert ist, um die externe Spannung an die externe Vorrichtung zu übertragen, und die integrierte Schaltung für Leistungsmanagement (160) so konfiguriert ist, dass sie die externe Spannung heruntersetzt, um sie an die Batterie (180) weiterzuleiten, und
wobei, wenn die externe Spannung an den Spannungsanschluss angelegt wird (T_VBUS) und die Störung von der Störungserkennungsschaltung (130) erkannt wird, ist die integrierte Schaltung für Leistungsmanagement (160) konfiguriert, um eine Spannung der Batterie (180) an den Ladestift (150) zu übertragen, und der Ladestift (150) konfiguriert ist, um die Spannung von der integrierten Schaltung für Leistungsmanagement (160) an die externe Vorrichtung zu übertragen.

12. Elektronische Vorrichtung nach einem der Ansprüche 1 bis 11, wobei, wenn keine externe Spannung von der Spannungsabschaltschaltung (120) an den internen Knoten (L3_VBUS) angelegt wird, die integrierte Schaltung für Leistungsmanagement (160) konfiguriert ist, um eine Spannung der Batterie (180) zu erhöhen, die dann an den Ladestift (150) übertragen wird, und der Ladestift (150) konfiguriert ist, um die erhöhte Spannung an die externe Vorrichtung zu übertragen.

## Revendications

1. Dispositif électronique comprenant :
un connecteur (110) pour la connexion à un premier dispositif externe, le connecteur incluant une borne de tension (T_VBUS), une borne de détection (T_SBU1, T_SBU2) et une borne de données ;
une batterie (180) ;
un circuit de détection de corruption (130) configuré pour détecter si le connecteur (110) est corrompu ;
un circuit de coupure de tension (120) connecté à la borne de tension (T_VBUS) du connecteur (110), et configuré pour connecter électriquement la borne de tension (T_VBUS) à un nœud interne (L3_VBUS) lorsque la corruption du connecteur (110) n'est pas détectée par le circuit de détection de corruption (130) et pour déconnecter électriquement la borne de tension (T_VBUS) du nœud interne (L3_VBUS) lorsque la corruption est détectée par le circuit de détection de corruption (130) ;
une broche de charge (150) connectée au nœud interne (L3_VBUS), et configurée pour transférer une tension du nœud interne à un second dispositif externe lorsque la broche de charge (150) est connectée au dispositif externe, que la corruption soit détectée ou non ; et
un circuit intégré de gestion d'alimentation (160) connecté entre le nœud interne (L3_VBUS) et la batterie (180), et configuré pour charger la batterie (180) en utilisant la tension du nœud interne ou pour générer la tension du nœud interne (L3_VBUS) en utilisant une tension de la batterie (180),
dans lequel le circuit de détection de corruption (130) est configuré pour détecter si le connecteur (110) est corrompu en utilisant différentes techniques, selon qu'une tension externe est fournie ou non par l'intermédiaire de la borne de tension (T_VBUS),
lorsque la tension externe n'est pas fournie par l'intermédiaire de la borne de tension (T_VBUS), le circuit de détection de corruption (130) est configuré pour :
fournir du courant à la borne de détection ; et
détecter si le connecteur (110) est corrompu, sur la base d'une tension de la borne de détection, dans lequel, lorsque la tension de la borne de détection (T_SBU1, T_SBU2) est inférieure à une première valeur seuil (VTH1), le circuit de détection de corruption (130) est configuré pour détecter que le connecteur (110) est corrompu.

2. Dispositif électronique selon la revendication 1, dans lequel le circuit de détection de corruption (130) inclut un circuit de protection contre les surtensions (OVP).

3. Dispositif électronique selon la revendication 1 ou 2, dans lequel le circuit de coupure de tension (120) est configuré pour :
détecter si la tension externe est fournie par l'intermédiaire de la borne de tension (T_VBUS) ; et
transférer un signal indiquant que la tension externe est fournie, au circuit de détection de corruption (130).

4. Dispositif électronique selon la revendication 1, 2 ou 3, dans lequel le circuit de détection de corruption (130) est configuré pour :
fournir périodiquement le courant à la borne de détection (T_SBU1, T_SBU2) ; et
détecter que le connecteur (110) est corrompu, lorsque la tension de la borne de détection (T_SBU1, T_SBU2) a été mesurée en continu comme étant inférieure à la première valeur seuil un nombre de fois supérieur ou égal à une deuxième valeur seuil (VTH2).

5. Dispositif électronique selon l'une quelconque des revendications 1 à 4, dans lequel, après que le circuit de détection de corruption (130) a fourni périodiquement le courant à la borne de détection et a détecté que le connecteur (110) est corrompu, lorsque la tension de la borne de détection est supérieure à une troisième valeur seuil (VTH3), le circuit de détection de corruption (130) est configuré pour déterminer que le connecteur (110) n'est plus corrompu.

6. Dispositif électronique selon l'une quelconque des revendications 1 à 5 dans lequel le circuit de détection de corruption (130) fournit périodiquement le courant à la borne de détection, et
dans lequel, après avoir détecté que le connecteur (110) est corrompu, le circuit de détection de corruption (130) est configuré pour déterminer que le connecteur (110) n'est plus corrompu, lorsque la tension de la borne de détection a été mesurée en continu comme étant inférieure à une troisième valeur seuil un nombre de fois supérieur ou égal à une quatrième valeur seuil.

7. Dispositif électronique selon l'une quelconque des revendications 1 à 6, dans lequel, lorsque la tension externe est fournie par l'intermédiaire de la borne de tension (T_VBUS), le circuit de détection de corruption (130) est configuré pour :
connecter la borne de détection à un nœud de masse par l'intermédiaire d'une résistance ; et
détecter si le connecteur (110) est corrompu, sur la base d'une tension de la borne de détection.

8. Dispositif électronique selon la revendication 7, dans lequel le circuit de détection de corruption (130) est configuré pour :
connecter périodiquement la borne de détection au nœud de masse par l'intermédiaire de la résistance ; et
détecter que le connecteur (110) est corrompu, lorsque la tension de la borne de détection a été mesurée en continu comme étant égale ou supérieure à une cinquième valeur seuil (VTH5) un nombre de fois supérieur ou égal à une sixième valeur seuil (VTH6).

9. Dispositif électronique selon la revendication 7 ou 8, dans lequel le circuit de détection de corruption (130) connecte périodiquement la borne de détection au nœud de masse par l'intermédiaire de la résistance, et
dans lequel, après avoir détecté que le connecteur (110) est corrompu, le circuit de détection de corruption (130) détermine que la corruption du connecteur (110) n'est pas détectée, lorsque la tension de la borne de détection a été mesurée en continu comme étant inférieure à une septième valeur seuil (VTH7) un nombre de fois supérieur ou égal à une huitième valeur seuil (VTH8).

10. Dispositif électronique selon l'une quelconque des revendications 1 à 9, comprenant en outre :
une unité de microcommande connectée à la borne de données du connecteur (110), et configurée pour recevoir un signal indiquant si la tension externe est fournie par le circuit de coupure de tension (120) et pour effectuer une opération de réinitialisation lorsque la tension externe est fournie.

11. Dispositif électronique selon l'une quelconque des revendications 1 à 10, dans lequel, lorsqu'une tension externe est fournie à la borne de tension (T_VBUS) et que la corruption n'est pas détectée par le circuit de détection de corruption (130), la broche de charge (150) est configurée pour transférer la tension externe au dispositif externe, et le circuit intégré de gestion d'alimentation (160) est configuré pour abaisser la tension externe à transférer à la batterie (180), et
dans lequel, lorsque la tension externe est fournie à la borne de tension (T_VBUS) et que la corruption est détectée par le circuit de détection de corruption (130), le circuit intégré de gestion d'alimentation (160) est configuré pour transférer une tension de la batterie (180) à la broche de charge (150), et la broche de charge (150) est configurée pour transférer la tension du circuit intégré de gestion d'alimentation (160) au dispositif externe.

12. Dispositif électronique selon l'une quelconque des revendications 1 à 11, dans lequel, lorsqu'aucune tension externe n'est appliquée par le circuit de coupure de tension (120) au nœud interne (L3_VBUS), le circuit intégré de gestion d'alimentation (160) est configuré pour relever une tension de la batterie (180) à transférer à la broche de charge (150), et la broche de charge (150) est configurée pour transférer la tension relevée au dispositif externe.
